# EUROPEAN PATENT APPLICATION

(11) **EP 4 809 797 A1**
(43) Date of publication of application: **23.09.2026**
(21) Application number: 25164156.9
(22) Date of filing: 17.03.2025
(51) Int. Cl.: A01B 1/24, A01D 7/00, A01B 29/02, A01G 20/00

(54) **A SURFACE LEVELLING DEVICE**

(71) Applicant: Husqvarna AB, 561 82 Huskvarna (SE)
(72) Inventor: Neuburger, Sebastian, 89160 Dornstadt (DE); Müller-Braun, Matthias, 89233 Neu-Ulm (DE); Reh, Bernhard, 89150 Laichingen (DE); Schrof, Petra, 89171 Illerkirchberg (DE)
(74) Representative: Finkele, Rolf

(57) **Abstract**

A surface levelling device (100) comprises a coupling part (102) configured to be couplable to a handle, and a surface levelling frame (104) configured to level a surface by contacting the surface with the surface levelling frame (104) in an assembled state. The coupling part (102) is connected to the surface levelling frame (104). The surface levelling device (100) is characterized in that the surface levelling frame (104) is configured to be disassembled into a plurality of parts in a disassembled state.

## Description

### TECHNICAL FIELD

The present disclosure relates to a lawn care equipment for use in the maintenance and even distribution of soil, sand, or other materials on a lawn or garden surface. Particularly, the present disclosure relates to a surface levelling device that efficiently distributes material and achieves a uniform surface for turf growth, promoting better drainage, aesthetics, and overall lawn health.

### BACKGROUND

Over time, lawns often experience soil erosion or removal of soil, and it becomes necessary to add an appropriate amount of soil to maintain the lawn's vitality. Currently, the typical method is to first pour soil onto the areas of the lawn that need replenishment, then use a lawn levelling device, in particular a levelling rake to spread, level, and compact the soil. Existing levelling rakes are mostly in the form of large square flat plates, and during use, the rake must be pressed onto the soil pile and dragged back and forth to evenly distribute the soil. Therefore, today's levelling rakes are mostly solid and stable parts with a heavy weight. The stability, size and weight of the levelling rake are needed for evenly levelling the lawn. However, these result in large and heavy gardening tools which are bulky during transportation and storage.

An example of a levelling rake is described in United States Patent Application US 2010/0088906 A1 (hereinafter referred to as '906 reference). The '906 reference discloses a rake designed for levelling surfaces covered with loose particulate matter, such as sand or soil. A rake head of the rake consists of multiple bars arranged in a specific pattern and spaced apart, with a handle fixedly attached via a movable fastener that adjusts the handle's angle relative to the rake head. The '906 reference discloses a one-piece levelling rake that occupies space during storage.

Another example of a lawn levelling harrow is described in Chinese Utility Model CN 219,437,588 U (hereinafter referred to as '588 reference). The '588 reference discloses a lawn levelling harrow consisting of a harrow head and a holding rod. The harrow head is movably connected to the holding rod and comprises a frame with a supporting rod frame that holds multiple rod pieces. The holding rod is made up of threaded pipes that are detachably connected with each other. The detachable rod allows that a reduced storage space is needed.

Another example of a beach sand flattening device is described in Chinese Utility Model CN 220,538,725 U (hereinafter referred to as '725 reference). The '725 reference discloses a beach sand flattening device consisting of a holding rod and a sand flattening plate. The holding rod comprises a lower holding rod, while the flattening plate features long and short side pieces forming a fixed, unmountable and rectangular frame, with bottom pieces arranged inside the frame. For storage, the device is disassembled by pressing a positioning pin to pull out and separate the holding rods, unscrewing a long bolt, and rotating the storage support. The components are then clamped together in U-shaped grooves for compact storage. This sand flattening device is convenient to store and carry, making it practical for tourists and players, and facilitating activities like tent building by easily flattening small areas of sand.

### SUMMARY OF THE INVENTION

In view of the above, it is an objective of the present invention to provide a surface levelling device which is at the same time robust, reliable to use as well as convenient to store during non-use. The objective is at least partially achieved by a surface levelling device according to the present invention.

According to an aspect of the present invention, the surface levelling device comprises a coupling part configured to be couplable to a handle, and a surface levelling frame configured to level a surface by contacting the surface with the surface levelling frame in an assembled state. The coupling part is connected to the surface levelling frame. The surface levelling device is characterized in that the surface levelling frame is configured to be disassembled into a plurality of parts in a disassembled state.

The modular surface levelling device according to the present invention is designed to be compact and detachable, allowing for easy storage in environments with limited space. Each modular part may be disassembled, reducing the overall size of the surface levelling device and making it easy to store in smaller spaces. This feature is especially beneficial for the user who have restricted storage options or those who only require the surface levelling device on an occasional basis. The modular structure also facilitates the transportation of the surface levelling device. The individual parts may be packed efficiently, making it easy to transport the surface levelling device to different work sites.

In addition to these storage and transportation advantages, the modular structure contributes to the ease of maintenance. User is not required to replace the entire surface levelling device if a single part becomes damaged or worn out. Instead, they may simply remove and replace the specific part that needs attention. This targeted repair process not only saves time by avoiding the need for a complete overhaul but also reduces the overall cost of maintenance.

Further, the modular surface levelling device offers great flexibility, allowing a user to easily adjust or expand the surface levelling device to accommodate different lawn sizes, soil types, and specific levelling needs. Whether it's a small residential yard or a larger commercial lawn, the surface levelling device is configured to ensure an even distribution of soil, sand, or other materials across the surface, promoting healthy grass growth and improving drainage.

Further, the consistent, uniform levelling provided by the surface levelling device helps avoid issues like water pooling or uneven growth, contributing to a more aesthetically pleasing lawn. Additionally, the reduced labor intensity ensures that the user may complete lawn levelling tasks faster, with less physical strain.

According to the present invention, a surface levelling device is provided which can be assembled and disassembled manually or preferably by using one tool in an easy and efficient way by the user himself.

According to an exemplary embodiment of the invention, the surface levelling frame comprises in the disassembled state comprises a smaller packaging size than in the assembled state. The surface levelling frame of the surface levelling device is modular and configured to be disassembled into a plurality of parts in the disassembled state. When disassembled, the smaller parts, for example, may be placed on the larger parts of the surface levelling frame to reduce the packaging size of the surface levelling frame. This may allow for easy storage in environments with limited space. Additionally, this allows a smaller packaging size which results in reduced logistic and waste disposal costs.

According to an exemplary embodiment of the invention, the surface levelling frame comprises two longitudinal bars and two side connections. The two longitudinal bars and the two side connections are connected such that the surface levelling frame is formed, wherein one end of each of the two longitudinal bars are connected to one of the two side connections by a connection element, and wherein another end of each of the two longitudinal bars are connected to another of the two side connections by a further connection element. This arrangement may result in a rigid, stable frame structure that may facilitate uniform distribution of forces. Thereby, precise and consistent surface levelling may be ensured. The modular design of the surface levelling frame may allow for adaptable configuration and ease of adjustment, offering enhanced versatility and efficiency in a wide range of applications. Furthermore, the described connection of the two side connections with the two longitudinal bars by use of the connection element as well as the further connection element, may result in a stable surface levelling frame distributing compressive forces more evenly.

According to an exemplary embodiment of the invention, the longitudinal bars may be made of a material selected from the group consisting of steel, aluminum, and composite materials. The used material may be adapted to the intended use of the surface levelling device.

According to an exemplary embodiment of the invention, the connection element and the further connection element may comprise a locking mechanism to prevent unintended detachment of the longitudinal bars from the side connections.

According to an exemplary embodiment of the invention, the surface levelling device further comprises a mounting part, wherein the coupling part is connected to the mounting part, and/or wherein the mounting part is positioned in a plane with the surface levelling frame, and/or wherein the mounting part is positioned between the two longitudinal bars.

By positioning the mounting part in a plane with the surface levelling frame and/or between the two longitudinal bars, the mounting part may ensure a secure connection between the coupling part and the surface levelling frame. Furthermore, the alignment and structural integrity of the surface levelling device is increased during operation. Additionally, the mounting part may facilitate the efficient transfer of force from the handle to the surface levelling frame, improving control and maneuverability while ensuring consistent and reliable surface contact for optimal levelling performance.

The mounting part may be formed from a material selected from the group consisting of metal, plastic, and composite materials. The material of the mounting part may be selected dependent on the used material of the longitudinal bars. Further, the mounting part may be configured to allow for adjustable positioning of the coupling part relative to the surface levelling frame. The mounting part may comprise a locking mechanism for securing the coupling part. Thereby, the coupling part may be easily and conveniently replaced. Alternatively, the coupling part and the mounting part may be integrally formed. Thereby, a stable and reliable connection of the coupling part with the surface levelling frame may be provided which could withstand increased forces on the surface levelling frame.

According to an exemplary embodiment of the invention, the mounting part is connected to the surface levelling frame such that the mounting part is rotatable relative to the surface levelling frame. This rotational capability may reduce user fatigue by enabling a more ergonomic and comfortable grip, as the handle connected to the coupling part may as well be rotated to suit the user's preferred position during operation. Furthermore, the surface levelling device may be used by users with different body sizes in an ergonomic way.

According to an exemplary embodiment of the invention, the rotational movement of the mounting part may be limited by a stop mechanism. Thereby to excessive rotation during use may be prevented. According to an exemplary embodiment invention, the mounting part may comprise a locking mechanism that may allow the user to lock the rotational position of the mounting part relative to the surface levelling frame. Thereby, the surface levelling device may be parked in a kind of parking position from which the user may easily start to work again.

The mounting part may be rotatably connected to the surface levelling frame via a swivel joint, bearing, or pivot mechanism. The mounting part may be manually rotated by the user without requiring tools or additional components. Further, the rotatability of the mounting part enables that the coupling part may be positioned in multiple orientations for the user convenience and ergonomic operation. Additionally, the rotatability of the rotatable mounting part may enable various surface levelling applications, comprising both horizontal and inclined levelling.

According to an exemplary embodiment of the invention, the connection element and/or the further connection element are a threaded rod or a rod with a thread at its ends. In particular, the connection element and/or the further connection element have a threaded sleeve screwed on their respective end. The connection of a threaded rod or a rod with threaded ends and a respective threaded sleeve screwed onto its ends provide a secure, adjustable, and reliable connection between the parts of the surface levelling frame. Additionally, the screw connection between the fastening element respectively the further fastening element, in particular the thread of a rod screwed into a threaded sleeve, provides strong fastening capabilities while allowing for easy assembly and disassembly. Their threaded nature may ensure a firm hold, minimizing any potential loosening or misalignment during use. Additionally, the versatility of the screwed connections make them compatible with a wide range of surface levelling frame configurations, enhancing the overall flexibility and ease of customization for different applications. The threaded sleeve may have a head which is configured with a portion at which a tool may engage the head. The head may be a hexagonal or slotted head. Hence, providing the threaded sleeve with the head may allow for manual or tool-assisted tightening.

According to an exemplary embodiment of the invention, the surface levelling device further comprises two intermediate bars, wherein each of the two intermediate bars is positioned in the plane with the surface levelling frame. The intermediate bars may enhance the structural stability and rigidity of the surface levelling device. Additionally, the intermediate bars increases the amount of surface of the surface levelling frame, which comes in contact with the lawn to be flattened. Thereby, the accuracy and consistency of the levelling process is increasable.

Being positioned in the plane with the surface levelling frame according to the present invention may denote that the intermediate bars are aligned with the surface levelling frame. Thereby, the intermediate bars help to distribute forces evenly across the entire structure, ensuring a more balanced and reliable levelling action. Further, in particular, the two intermediate bars are positioned parallel to the two longitudinal bars of the surface levelling frame. This parallel arrangement of the two intermediate bars help to maintain the surface levelling frame's alignment, ensuring that the surface levelling device may operate smoothly and efficiently while minimizing the risk of misalignment or uneven levelling.

According to an exemplary embodiment of the invention, the two intermediate bars may be made from a material selected from the group consisting of steel, aluminum, and high-strength composite materials to ensure durability and strength. The material of the intermediate bars may be chosen dependent on the material used for the longitudinal bars and/or the mounting part.

According to an exemplary embodiment of the invention, each of the two intermediate bars is positioned between the mounting part and one of the longitudinal bars, and/or one end of each of the two intermediate bars is connected to one of the two side connection, in particular by the connection element, and/or another end of the two intermediate bars is connected to another of the two side connections, in particular by the further connection element.

By connecting one end of each intermediate bar to the side connection, in particular by the connection element, and the other end of the intermediate bar to another side connection, in particular by the further connection element, the structure of the surface levelling frame is reinforced and balanced, distributing forces evenly across the surface levelling frame. This configuration may also enhance the load-bearing capacity of the surface levelling device, allowing it to handle heavier or more demanding tasks without compromising performance. Furthermore, the use of two intermediate bars may help to prevent misalignment, ensuring that the surface levelling frame remains in the correct position throughout the levelling process. Additionally, the modular nature of this design may allow for easier adjustments and disassembly, making the surface levelling device more versatile and user-friendly.

According to an exemplary embodiment of the invention, at least one of the two side connections comprises a pivot connection part. The pivot connection part is configured to pivotably hold the mounting part and/or the pivot connection part pivotably holds one end of the mounting part. The pivotable arrangement of the mounting part may allow for adjustment of the handle connected to the coupling part, enabling the handle to be positioned in a manner that aligns with the user's preferred orientation. This adjustability may enhance ergonomic comfort during operation, potentially reducing user fatigue by allowing the user to maintain a more natural and comfortable grip throughout use.

According to an exemplary embodiment of the invention, the pivot connection part may be configured to allow rotation of the mounting part between a pre-defined angular range of 0 and 180 degrees, particularly 30 and 150 degrees, more particularly 45 and 135 degrees. In particular, a connection between the pivot connection part and the mounting part may comprise a locking mechanism that may enable the user to fix the mounting part at a specific angle after pivoting.

According to an exemplary embodiment of the invention, at least one of the two side connections further comprises two bracket members each configured to be connectable to one of the two longitudinal bars, and/or one end of one of the two longitudinal bars is connected to one of the two bracket members, and/or one end of another one of the two longitudinal bars is connected to another of the two bracket members.

In particular, the backet member may be rotation-free connected to the longitudinal bar by the connection element respectively the further connection element. Hence, these bracket members may prevent any inadvertent movement or misalignment during use, ensuring the surface levelling frame remains rigid and properly aligned.

Furthermore, in particular, the bracket member interacts with the pivot connection part. Hence, a robust connection may ensure that the surface levelling frame has an increased stability and that a force distribution is more uniform across the surface levelling frame, which improves the overall performance and accuracy of the levelling process.

According to an exemplary embodiment of the present invention, the pivot connection part is further configured to be connectable to the two intermediate bars, and/or one end of each of the two intermediate bars is connected to the pivot connection part.

In particular, the pivot connection part may be rotation-free connected to the intermediate bar by the connection element respectively the further connection element. Hence, these pivot connection part may prevent any inadvertent movement or misalignment during use, ensuring the surface levelling frame remains rigid and properly aligned.

According to an exemplary embodiment of the invention, the connection element connects one end of each of the two longitudinal bars, the two intermediate bars, one of two pivot connection parts and two of four bracket members with each other, and/or the further connection element connects another end of each of the two longitudinal bars, the two intermediate bars, another of the two pivot connection parts and another two of the four bracket members with each other. In particular, at the same time, one of the two pivot connection parts engages with two of the four bracket members and the other one of the two pivot connection parts engages with the other two of the fur bracket members. Additionally, one pivot connection part and two bracket members together form one of the two side connections. Additionally, the two side connections, each comprising on pivot connection part and two bracket members engaging each other, are mounted at opposite ends of surface levelling frame respectively at two ends of the longitudinal bars.

Additionally, the described connection of the longitudinal bars, the intermediate bars, and the mounting part with the bracket members respectively the pivot connection part by means of the connection element respectively the further connection element may increase the durability of the device by reinforcing critical junctions, reducing wear and tear. The design or arrangement may also simplify assembly and disassembly, making the surface levelling device more user-friendly while maintaining strength and reliability during operation.

According to an exemplary embodiment of the invention, the mounting part and/or the two intermediate bars have a substantially round geometry. The round geometry of the mounting part and/or the two intermediate bars may be configured to optimize the distribution of force applied during use, minimizing concentrated pressure points. This geometrical design may help to reduce the likelihood of deformation or damage to both the surface levelling frame and the surface being levelled. Additionally, the smooth, curved shape of the mounting part and/or the two intermediate bars may allow for a more efficient interaction with the subsoil by evenly spreading the applied force. This even distribution may result in the compacting of the subsoil, promoting greater stability and firmness in the ground. By facilitating more uniform pressure, the round geometry may help to prevent excessive displacement or disruption of the subsoil, making the levelling process more effective. Additionally, the round shape of the mounting part may allow to foresee an easy and reliable locking mechanism to lock the handle in a pre-defined position.

According to an exemplary embodiment of the invention, the two longitudinal bars have a substantially square geometry. The substantially square geometry may play a critical role in evenly draining the floor or surface. The flat sides of the square geometry may facilitate more consistent contact with the surface, ensuring that pressure is spread evenly across the floor. This uniform pressure distribution may allow for a smoother levelling process, as the force applied to the ground is not concentrated in any one area, preventing uneven compaction or damage to the surface. For example, the two longitudinal bars may have a substantially rectangular geometry or may have a bar-shaped geometry.

According to an exemplary embodiment of the invention, the surface levelling device further comprises a handle, wherein the handle is removably connected to the coupling part, and wherein the handle is rotatable relative to the surface levelling frame. The rotatable handle may allow for customizable positioning, enabling the user to adjust the angle for a more ergonomic grip, reducing strain and fatigue during extended use. Additionally, the removable feature may provide the flexibility to detach the handle for easier storage and transportation, while still offering the option to re-attach it when needed.

According to an exemplary embodiment of the invention, the handle may be connected to the coupling part via a quick-release mechanism, allowing for easy attachment and detachment of the handle. In particular, the handle may be formed as a telescopic handle or as a modular structure.

According to an exemplary embodiment of the invention, the surface levelling device further comprises a locking mechanism to lock the handle in a pre-defined, particularly substantially perpendicular, orientation relative to the surface levelling frame. The locking mechanism may lock the handle in a substantially perpendicular position, which may result in a substantially vertical position of the handle relative to the surface which is levelled. This locking mechanism may provide a convenient and practical feature for the user when the surface levelling device is not in use. By locking the handle in this upright position, the surface levelling device may be easily parked without taking up unnecessary space or requiring the user to bend down to place it in a resting position. This locking mechanism may ensure that the handle remains securely positioned, preventing it from obstructing the area around the surface levelling device. As a result, the user do not have to bend down repeatedly to adjust the handle or store the surface levelling device, reducing strain and promoting better ergonomics. This design may improve user comfort, enhance efficiency, and contributes to the overall ease of use and handling of the surface levelling device.

Before discussing the invention with the help of the drawings the invention will be briefly discussed in general. A surface levelling device is provided, the assembly of which is carried out by a user himself. The surface levelling device comprises a coupling part configured to be couplable to a handle, and a surface levelling frame configured to level a surface by contacting the surface with the surface levelling frame in an assembled state. According to an exemplary embodiment of the present invention, the surface levelling frame comprises two longitudinal bars, two side connections, two intermediate bars, one mounting part, one connection element, and one further connection element that are plugged in and fitted by the user to complete the surface levelling frame.

The surface levelling device according to the present invention may have a small packaging size. The surface levelling device according to the present invention may require less force of the user to operate it effectively. The surface levelling device according to the present invention may perform pressing/ compacting of the soil/seeds.

According to an exemplary embodiment of the invention, the handle may be locked in a vertical position to allow the surface levelling device to be parked. The user may not always have to bend down for the handle. According to an exemplary embodiment of the invention, the surface levelling device, in particular the surface levelling frame may be formed by plugging-in various parts. According to an exemplary embodiment of the invention, the two longitudinal bars, two intermediate bars, and one mounting part may have different geometries. The square geometry may be configured to drain the floor evenly, while the round geometry may be configured to reduce the force and at the same time compact the subsoil. According to an exemplary embodiment of the invention, the mounting part may be configured to function as the rotating shaft for the handle. According to an exemplary embodiment of the invention, the two intermediate bars, and/or the mounting part may each have the round geometry and may be configured rotatable.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 illustrates a perspective view of a surface levelling frame in an assembled state according to an exemplary embodiment of the present invention;
FIG. 2 illustrates an exploded view of a surface levelling frame according to an exemplary embodiment of the present invention; and
FIG. 3 illustrates a perspective view of a surface levelling device in a disassembled state according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

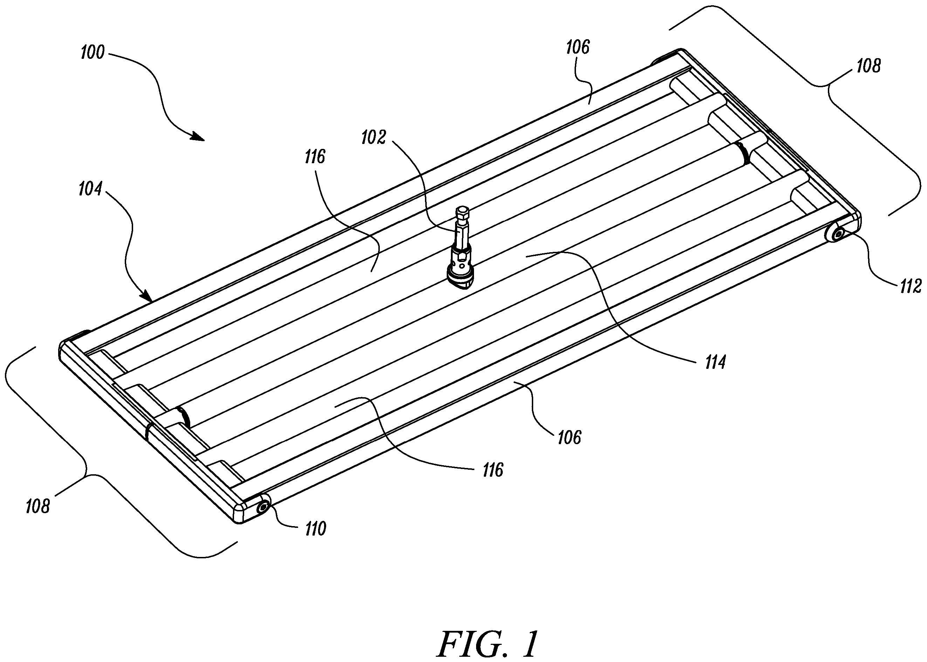

FIG. 1 illustrates a perspective view of a surface levelling device 100 in an assembled state. The surface levelling device 100 comprises a coupling part 102, a handle (not shown), and a surface levelling frame 104. In the assembled state of the surface levelling device 100, the surface levelling device 100 forms a modular structure with removably connected parts.

The coupling part 102 is configured to be coupled or connected to the handle (not shown in FIG. 1 for the ease of understanding). Additionally, the coupling part 102 is connected to the surface levelling frame 104 by being fixedly connected to the mounting part 114. By connecting the coupling part 102 to the mounting part 114, the coupling part 102 operatively links the handle and the surface levelling frame 104. The mounting part 114 is rotatably connected to the side connection 108 on both ends by a rotatable connection comprising a locking mechanism between each of the two ends of the mounting part 114 and a respective side connection 108, wherein the handle is rotatable relative to the surface levelling frame 104. Further, the locking mechanism is configured to lock the handle in a substantially perpendicular orientation relative to the surface levelling frame 104.

The surface levelling frame 104 of the surface levelling device 100 has a modular structure. In other words, the surface levelling frame 104 can be disassembled into a plurality of parts in a disassembled state. Afterwards, the surface levelling frame 104 can be assembled in the assembled state. Particularly, the assembly and disassembly may be done by the user manually with the use of solely one tool.

The surface levelling frame 104 comprises two longitudinal bars 106 and two side connections 108. The two longitudinal bars 106 and the two side connections 108 are removably connected such that the surface levelling frame 104 is formed. The two longitudinal bars 106 have a substantially square geometry. In the assembled state as shown in FIG. 1, one end of each of the two longitudinal bars 106 are connected to one of the two side connections 108 by a connection element 110. Further, another end of each of the two longitudinal bars 106 are connected to another of the two side connections 108 by a further connection element 112. When the two longitudinal bars 106 and the two side connections 108 are removably connected, they form a substantially rectangular surface leveling frame 104 with the length of the two longitudinal bars 106 substantially defining the length of the surface levelling frame 104, and the length of the side connections 108 substantially defining the width of the surface levelling frame 104.

With continuous reference to FIG. 1, the surface levelling frame 104 further comprises a mounting part 114. The coupling part 102 is fixedly connected to the mounting part 114. The mounting part 114 is positioned in a plane with the surface levelling frame 104 and between the two longitudinal bars 106.

Further, the mounting part 114 is rotatably connected to the respective side connection 108 at both ends of the mounting part 114 such that the mounting part 114 and therewith the coupling part 102 is rotatable relative to the surface levelling frame 104 in a clockwise and/or anticlockwise direction relative to a user operating the surface levelling device 100. Particularly, the mounting part 114 is configured to be rotatable relative to the surface levelling frame 104 within a pre-defined limit in either direction. The mounting part 114 has a substantially round geometry, in particular the mounting part 114 has an elongated cylinder like geometry to support its rotation relative to the surface levelling frame 104.

Furthermore, the surface levelling frame 104 further comprises two intermediate bars 116, which have a substantially round geometry. In the assembled state, each of the two intermediate bars 116 is positioned in the plane with the longitudinal bars 106 and the side connection 108 respectively the surface levelling frame 104. Further, each of the two intermediate bars 116 is positioned between the mounting part 114 and one of the longitudinal bars 106. One end of each of the two intermediate bars 116 are mounted rotation-free to one of the two side connections 108 by a connection element 110 and another end of the two intermediate bars 116 is mounted rotation-free to another of the two side connections 108 by a further connection element 112.

During use, when the user grabs the handle to operate the surface levelling device 100, and applies force, the surface levelling frame 104, which is configured to level a surface by contacting the surface, supports surface levelling activity.

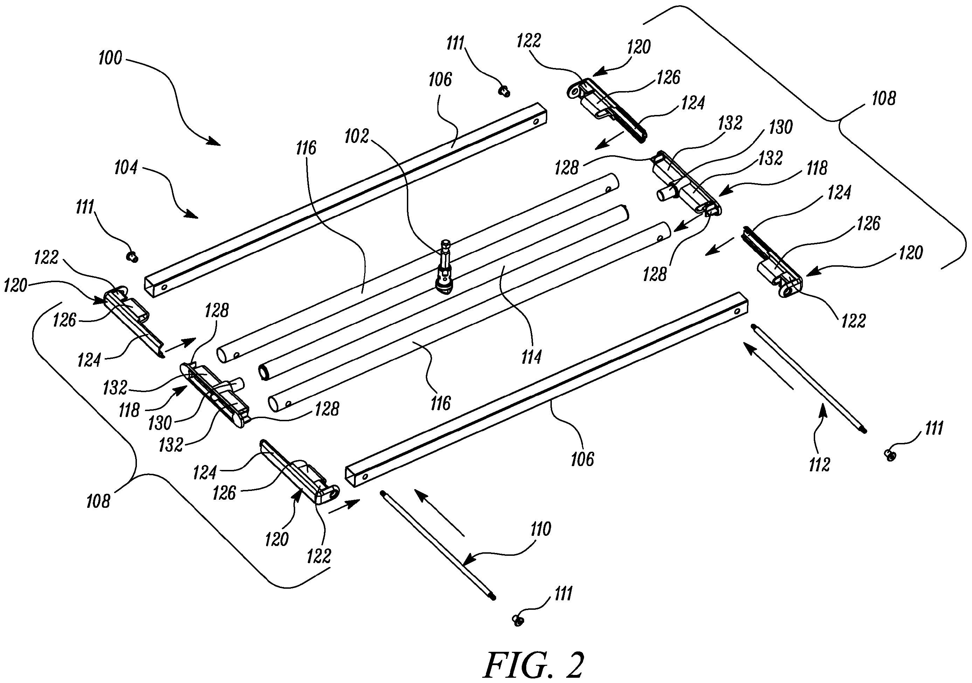

FIG. 2 illustrates an exploded view of the surface levelling frame 104. The surface levelling frame 104 has a modular structure formed from two longitudinal bars 106, two side connections 108, one mounting part 114, two intermediate bars 116, one connection element 110 and one further connection element 112.

Further, each of the two side connections 108 comprises one pivot connection part 118 which pivotably holds the mounting part 114, and two intermediate bars 116 in the assembled state. Further, each of the two side connections 108 comprises two bracket members 120, wherein on longitudinal bar 106 is mounted rotation-free to each of the two bracket members 120. Further, each of the two bracket members 120 engage the pivot connection part 118 to form the side connection 108.

Further, each of the bracket members 120 comprise a first plug-in part 122 plugged into the corresponding longitudinal bar 106, and a contact portion 124 which engages the pivot connection part 118 as well as the further bracket member 120. Furthermore, each bracket member 120 comprises a first spacer 126 formed next to the first plug-in part 122. The first spacer 126 maintains a pre-defined distance between the longitudinal bar 106 and the adjacent intermediate bar 116 and/or absorbs forces, when they are paired together by engagement of the bracket member 120 with the pivot connection part 118.

Further, one end of the mounting part 114 is rotatably connected to the pivot connection part 118. Additionally, one end of each of the two intermediate bars 116 are connected to the pivot connection part 118. Each of the two pivot connection parts 118 comprises two oppositely disposed spaced apart second plug-in part 128 positioned on opposite ends of the pivot connection part 118, and a pivot bearing element 130 disposed between and distant from the two second plug-in parts 128. The pivot bearing element 130 is inserted into the mounting part 114 such that a rotation of the mounting part 114 relative to the pivot bearing element 130 is possible. Additionally, each of the two second plug-in parts 128 is inserted in on end of a respective one of the intermediate bars 116. The pivot connection part 118 further comprises two second spacers 132, each formed between one of the two second plug-in parts 128 and the pivot bearing element 130. Each of the two second spacers 132 maintains a pre-defined distance between the mounting part 11 and the adjacent intermediate bar 116 and/or absorbs forces, when they are mounted to the pivot connection part 118.

Each of the two longitudinal bars 106, and the two intermediate bars 116 are provided with opposing pass-through holes proximal to their respective ends, which are formed such that a connection element 110 formed as a rod 110 respectively a further connection element 112 formed as a rod 112 can be inserted into all of them in the assembled state. Additionally, each of the bracket members 120 and the pivot connection part 118 is provided with a pass-through hole. All the pass-through holes associated with different parts of the surface levelling frame 104 have a substantially identical shape and size such that the connection element 110 is inserted through one set of through-holes proximal to the one side connection 108 and the further connection element 112 is inserted through another set of through-holes proximal to the other side connection 108.

During a first step of assembling the surface levelling frame 104, one end of the mounting part 114 is fitted onto the pivot bearing element 130 and one end of each of the two intermediate bars 116 is fitted onto a respective one of the two second plug-in parts 128. This is repeated for the other end of the mounting part 114 and the two intermediate bar 116 with the other pivot connection part 118.

In a second step of assembling the surface levelling frame 104, one end of one of the two longitudinal bars 106 is fitted onto the first plug-in part 122. This is repeated for the other of the longitudinal bars 106 and the other bracket member 120. Afterwards, the two bracket members 120 are engages with opposite ends of the pivot connection part 118 such that the first spacer 126 is in contact with the respective one of the two intermediate bars 116.

During a third step of assembling the surface levelling frame 104, the connection element 110 and the further connection element 112 are used to screw respectively mount the surface levelling frame 104 such that a surface levelling may be performable with the surface levelling frame 104. Therefore, the connection element 110 is successively put through the first of the two longitudinal bars 106, the first spacer 126 of the first of the bracket members 120, the first of the two intermediate bars 116, the first of the two second spacers 132, the second of the two second spacers 132, the second of the two intermediate bars 116, the first spacer 128 of the second of the two bracket members 120, and the second of the two longitudinal bars 106. Afterwards, a respective threaded sleeve 111 with a head is securely screwed onto each of the two opposite ends of the connection element 110. Further, the further connection element 112 is successively put through the first of the two longitudinal bars 106, the first spacer 126 of the first of the bracket members 120, the first of the two intermediate bars 116, the first of the two second spacers 132, the second of the two second spacers 132, the second of the two intermediate bars 116, the first spacer 128 of the second of the two bracket members 120, and the second of the two longitudinal bars 106. Afterwards, a respective threaded sleeve 111 with a head is securely screwed onto each of the two opposite ends of the further connection element 112.

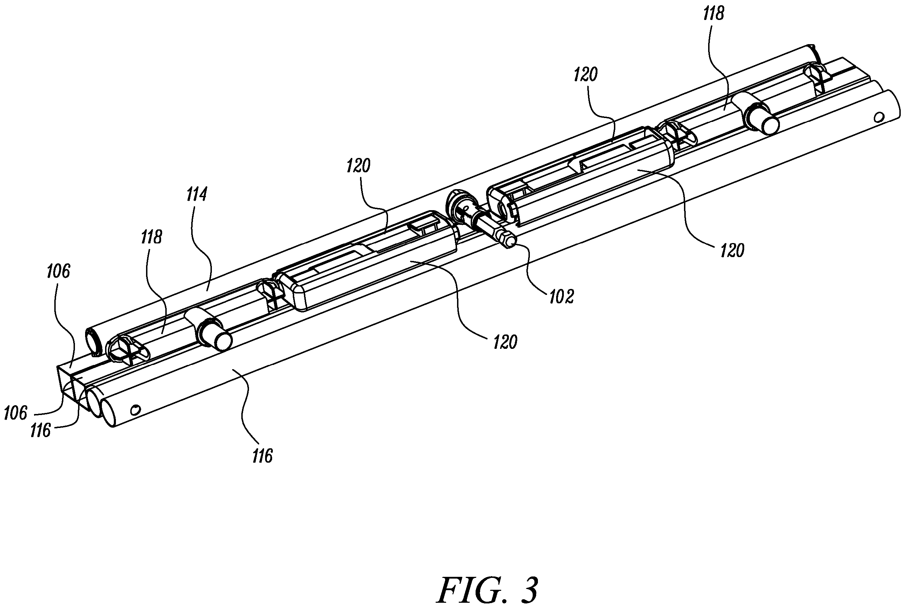

FIG. 3 illustrates a perspective view of a surface levelling device 100 in a disassembled state. The surface levelling frame 104 is disassembled for storage and/or packaging. The surface levelling frame 104 in the disassembled state have a smaller packaging size than in the assembled state. In the packaged or stored state, the two longitudinal bars 106 are placed side by side on the surface. Further, the two intermediate bars 116 having substantially the same length as the two longitudinal bars 106 are placed side by side on the surface next to the two longitudinal bars 106. Further, the mounting part 114 is placed on one of the longitudinal bars 106, particularly the longitudinal bar 106 positioned away from the intermediate bar 116. Further, the two pivot connection parts 118, and the four bracket members 120 are all arranged above the lower layer formed by the two intermediate bars 116 and the two longitudinal bars 106.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Surface Levelling Device
- **102**: Coupling Part
- **104**: Surface Levelling Frame
- **106**: Longitudinal Bar
- **108**: Side Connection
- **110**: Connection Element
- 111: Threaded Sleeve
- **112**: Further Connection Element
- **114**: Mounting Part
- **116**: Intermediate Bars
- **118**: Pivot Connection Part
- **120**: Bracket Member
- **122**: First Plug-in Part
- **124**: Contact Portion
- **126**: First Spacer
- **128**: Second Plug-in Part
- **130**: Pivot Bearing Element
- **132**: Second Spacer

## Claims

1. A surface levelling device (100), comprising:
a coupling part (102) configured to be couplable to a handle,
a surface levelling frame (104) configured to level a surface by contacting the surface with the surface levelling frame (104) in an assembled state,
wherein the coupling part (102) is connected to the surface levelling frame (104),
**characterized in that**:
the surface levelling frame (104) is configured to be disassembled into a plurality of parts in a disassembled state.

2. The surface levelling device (100) according to claim 1,
wherein the surface levelling frame (104) comprises in the disassembled state a smaller packaging size than in the assembled state.

3. The surface levelling device (100) according to claim 1 or claim 2,
wherein the surface levelling frame (104) comprises
two longitudinal bars (106), and
two side connections (108),
wherein the two longitudinal bars (106) and the two side connections (108) are connected to form the surface levelling frame (104),
wherein one end of each of the two longitudinal bars (106) are connected to one of the two side connections (108) by a connection element (110),
wherein another end of each of the two longitudinal bars (106) are connected to another of the two side connections (108) by a further connection element (112).

4. The surface levelling frame (104) according to any one of the claims 1 to 3, wherein the surface levelling device (100) further comprises a mounting part (114),
wherein the coupling part (102) is connected to the mounting part (114), and/or
wherein the mounting part (114) is positioned in a plane with the surface levelling frame (104), and/or
wherein the mounting part (114) is positioned between the two longitudinal bars (106).

5. The surface levelling device (100) according to claims 4,
wherein the mounting part (114) is connected to the surface levelling frame (104) such that the mounting part (114) is rotatable relative to the surface levelling frame (104).

6. The surface levelling device (100) according to any one of the claims 3 to 5, wherein the connection element (110) and/or the further connection element (112) are a threaded rod or a rod with a thread at its ends,
in particular wherein the connection element (110) and/or the further connection element (112) have a threaded sleeve screwed on their respective end.

7. The surface levelling device (100) according to any one of the claims 1 to 6, further comprising:
two intermediate bars (116),
wherein each of the two intermediate bars (116) is positioned in the plane with the surface levelling frame (104).

8. The surface levelling device (100) according to claim 7,
wherein each of the two intermediate bars (116) is positioned between the mounting part (114) and one of the longitudinal bars (106), and/or
wherein one end of each of the two intermediate bars (116) is connected to one of the two side connections (108), and/or
wherein another end of the two intermediate bars (116) is connected to another of the two side connections (108).

9. The surface levelling device (100) according to any one of the claims 2 to 8, wherein at least one of the two side connections (108) comprises a pivot connection part (118),
wherein the pivot connection part (118) is configured to pivotably hold the mounting part (114), and/or
wherein the pivot connection part (118) pivotably holds one end of the mounting part (114).

10. The surface levelling device (100) according to any one of the claims 2 to 9,
wherein at least one of the two side connections (108) further comprises two bracket members (120) each configured to be connectable to one of the two longitudinal bars (106), and/or
wherein one end of one of the two longitudinal bars (106) is connected to one of the two bracket members (120), and/or
wherein one end of another one of the two longitudinal bars (106) is connected to another of the two bracket members (120).

11. The surface levelling device (100) according to claim 9 or claim 10,
wherein the pivot connection part (118) is further configured to be connectable to the two intermediate bars (116), and/or
wherein one end of each of the two intermediate bars (116) is connected to the pivot connection part (118),

12. The surface levelling device (100) according to any one of the claims 2 to 10,
wherein the connection element (110) connects one end of each of the two longitudinal bars (106), the two intermediate bars (116), one of two pivot connection parts (118) and two of four bracket members (120) with each other, and/or
wherein the further connection element (112) connects another end of each of the two longitudinal bars (106), the two intermediate bars (116), another of the two pivot connection parts (118) and another two of the four bracket members (120) with each other.

13. The surface levelling device (100) according to any one of the claims 2 to 12,
wherein at least one of the two longitudinal bars (106) has a substantially square geometry, and/or
wherein at least one of the mounting part (114) and the two intermediate bars (116) has a substantially round geometry.

14. The surface levelling device (100) according to any one of the preceding claims, further comprising:
a handle,
wherein the handle is removably connected to the coupling part (102), and wherein the handle is rotatable relative to the surface levelling frame (104).

15. The surface levelling device (100) according to claim 14, further comprising
a locking mechanism to lock the handle in a pre-defined, particularly substantially perpendicular, orientation relative to the surface levelling frame (104).
